# FASCICULE DE BREVET EUROPEEN

(11) **EP 3 378 195 B1**
(45) Date de publication et mention de la délivrance du brevet: **08.01.2020**
(21) Numéro de dépôt: 16797849.3
(22) Date de dépôt: 15.11.2016
(51) Int. Cl.: H04L 12/26, H04W 84/00, H04W 84/18

(54) **DISPOSITIF DE SIMULATION D'UN RELAIS DE COMMUNICATION**
VORRICHTUNG ZUR SIMULATION EINES KOMMUNIKATIONS-RELAIS
DEVICE FOR SIMULATING A COMMUNICATION RELAY

(30) Priorité: 16.11.2015 FR 1502392
(43) Date de publication de la demande: 26.09.2018
(73) Titulaire: BULL SAS, 78340 Les Clayes sous Bois (FR)
(72) Inventeur: ROMAN, Alexandre, 83400 Hyères (FR); RICHARD, Julien, 13127 Vitrolles (FR)
(74) Mandataire: Cabinet Camus Lebkiri
(86) Numéro de dépôt international: PCT/EP2016/077753
(87) Numéro de publication internationale: WO 2017/085067

(56) Documents cités:
- EP-A1- 2 068 471
- IVANIC N ET AL: "A scalable testbed for emulating wireless Mobile Ad-hoc Networks", MILITARY COMMUNICATIONS CONFERENCE, 2008. MILCOM 2008. IEEE, IEEE, PISCATAWAY, NJ, USA, 16 novembre 2008 (2008-11-16), pages 1-5, XP031408380, ISBN: 978-1-4244-2676-8
- SERBAN CONSTANTIN ET AL: "Testing android devices for tactical networks: A hybrid emulation testbed approach", MILCOM 2015 - 2015 IEEE MILITARY COMMUNICATIONS CONFERENCE, IEEE, 26 octobre 2015 (2015-10-26), pages 489-494, XP032830914, DOI: 10.1109/MILCOM.2015.7357490

## Description

### Domaine technique de l'invention

Le domaine de l'invention est celui des Postes Radio de 4 Génération ou PR4G. Plus précisément le domaine de l'invention est celui de la qualification d'équipements apte à communiquer à travers un PR4G.

Un PR4G est un équipement radio utilisé sur les théâtres d'opération militaire. Une des particularités d'un PR4G est son aptitude à établir des communications selon un protocole d'accès multiple par division temporel, ou protocole TDMA.

### Etat de la technique antérieur

Le document "A scalable testbed for emulating wireless Mobile Ad-hoc Networks", Ivanic N et al, IEEE, Piscataway, NJ, USA, décrit un banc d'essai évolutif pour émuler des réseaux ad-hoc mobiles sans fil.

Dans l'état de la technique on est confronté à la nécessité de pourvoir qualifier un équipement. Une telle qualification est la garantie que les fonctionnalités de l'équipement sont effectives. Pour effectuer cette qualification il faut tester les fonctionnalités.

De nombreux équipements sont conçus pour communiquer avec un PR4G. Hors, eu égard à la nature sensible du PR4G, ce n'est pas un matériel qui est facilement disponible. La qualification d'un équipement communiquant avec un PR4G, et en particulier de sa fonction de communication, pose donc un problème.

Avant la qualification, la mise au point elle-même est problématique. En effet, une qualification peut être planifiée aussi bien en date qu'en durée, alors qu'une mise au point a une durée aléatoire. Dans ces conditions de durée non prévisible, il est encore plus difficile de se voir confier un PR4G.

De plus, même si un tel prêt était consenti, un PR4G est une radio prévue pour fonctionner en milieu hostile tout en conservant une portée de 50kms. Cela signifie que se trouver durablement à proximité d'un, ou plusieurs, PRG4 en fonctionnement peut être nocif pour la santé, à cause de la puissance d'émission. Hors au cours d'une phase de développement et de mise au point, la ou les personnes effectuant ces opérations, le plus souvent dans un bureau, sollicitent quasi continument la fonction de communication. Les niveaux d'exposition radio qui résulteraient de d'utilisation de PR4G réel pourraient être problématiques si aucune précaution n'était prise.

Dans l'état de la technique ces problèmes sont adressés par une instrumentation du système à qualifier pour lui permettre de communiquer sans avoir recours à un PR4G. Cependant dans cette configuration le dispositif n'est pas qualifié avec un PR4G, il est qualifié comme étant capable de communiquer.

### Exposé de l'invention

L'invention vise à remédier à tout ou partie des inconvénients de l'état de la technique identifiés ci-dessus, et notamment à proposer des moyens pour permettre la qualification d'un dispositif de traitement de données tactiques sans avoir recours à un PR4G. L'invention enseigne comment on peut simuler un PR4G avec des moyens logiciels et ainsi faire croire à un dispositif de traitement de données tactiques qu'il est effectivement connecté à un PR4G.

Dans ce dessein, un aspect de l'invention se rapporte à un dispositif de simulation d'un relais de communication pour au moins un dispositif de traitement de données tactiques, caractérisé en ce que le dispositif de simulation comporte :
- Un système de stockage de données ;
- Une première interface de connexion avec le dispositif de traitement de données tactiques ;
- Une deuxième interface de communication ;
- Un processeur connecté au système de stockage et aux interfaces, le processeur étant configuré pour :
   - Diviser un cycle temporel ayant une première durée prédéterminée en créneaux temporels d'une deuxième durée prédéterminée, chaque créneau temporel étant identifié par un indice dans le cycle temporel ;
   - Surveiller le trafic réseau sur la deuxième interface de communication ;
   - Emettre (1050) un message via la première interface pour tous les indices de créneaux sauf pour des créneaux identifiés par une liste d'au moins un indice exclu ;
   - Diffuser un message via la deuxième interface pour les créneaux identifiés par la liste d'au moins un indice exclu.

Outre les caractéristiques principales qui viennent d'être mentionnées dans le paragraphe précédent, le dispositif selon l'invention peut présenter une ou plusieurs caractéristiques complémentaires parmi les suivantes, considérées individuellement ou selon les combinaisons techniquement possibles:
- Le contenu des messages émis via la première interface est reçu via la deuxième interface ;
- Le processeur est configuré pour filtrer les messages ;
- les communications via la deuxième interface sont réalisées en utilisant le protocole UDP ;
- Un message reçu via la deuxième interface comporte un identifiant de dispositif de simulation d'un relais de communication ;
- Un message reçu via la deuxième interface comporte un identifiant de canal radio ;
- Le dispositif de simulation est un dispositif de traitement de données tactiques.

### Brève description des figures

D'autres caractéristiques et avantages de l'invention ressortiront à la lecture de la description qui suit, en référence aux figures annexées, qui illustrent :
- la figure 1, une illustration d'une mise en œuvre de l'invention ;
- la figure 2, une illustration d'un cycle TDMA ;
- la figure 3, une illustration d'étapes de procédé mises en œuvre par l'invention.

Pour plus de clarté, les éléments identiques ou similaires sont repérés par des signes de référence identiques sur l'ensemble des figures.

L'invention sera mieux comprise la lecture de la description qui suit et à l'examen des figures qui l'accompagnent. Celles-ci sont présentées à titre indicatif et nullement limitatif de l'invention.

### Description détaillée d'un mode de réalisation

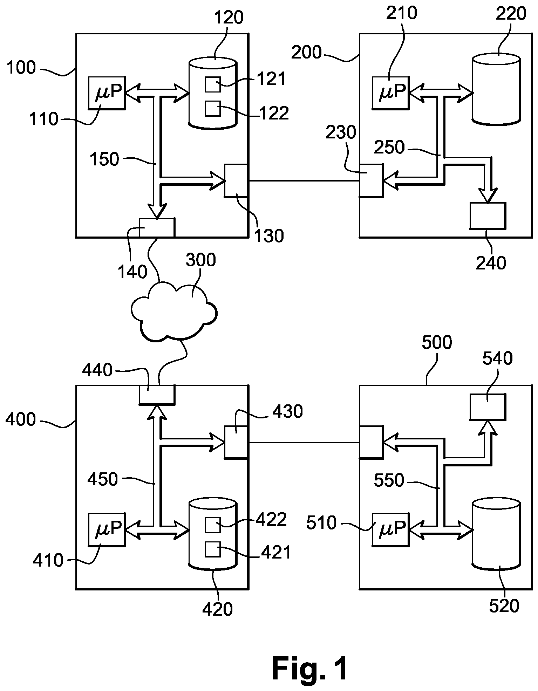

La figure 1 montre un premier dispositif 100 de simulation d'un relais de communication. Le premier dispositif de simulation d'un relais de communication comporte :
- Un microprocesseur 110 ;
- Des moyens de stockage 120, par exemple un disque dur qu'il soit local ou distant, qu'il soit fixe ou amovible, qu'il soit simple ou en grille (par exemple RAID) ;
- Une première interface 130 de communication, par exemple une interface série de type RS232, apte à établir une connexion avec un premier dispositif 200 de traitement de données tactiques ;
- Une deuxième interface 140 de communication, par exemple une carte de communication selon le protocole Ethernet. D'autres protocoles sont envisageables comme « Fibre Channel » ou InfiniBand.

Le microprocesseur 110 du premier dispositif de simulation, les moyens 120 de stockage du premier dispositif de simulation, la première interface 130 de communication du premier dispositif de simulation et la deuxième interface 140 du dispositif de simulation sont interconnectés par un bus 150.

Lorsque l'on prête une action à un dispositif celle-ci est en fait effectuée par un microprocesseur du dispositif commandé par des codes instructions enregistrés dans une mémoire du dispositif. Si l'on prête une action à une application, celle-ci est en fait effectuée par un microprocesseur du dispositif dans une mémoire duquel les codes instructions correspondant à l'application sont enregistrés. Lorsqu'un dispositif, ou une application émet un message, ce message est émis via une interface de communication dudit dispositif ou de la dite application.

Les moyens de stockage du premier dispositif de simulation comportent :
- Une zone 121 de simulation comportant des codes instruction correspondant à la mise en œuvre de l'invention et permettant au premier dispositif de simulation de se comporter, du point de vue du premier dispositif de traitement, comme un PR4G ;
- Une zone 122 de filtres comportant des instructions de filtrage de messages.

La figure 1 montre un premier dispositif 200 de traitement de données tactiques. Le premier dispositif de traitement de données tactiques comporte :
- Un microprocesseur 210 ;
- Des moyens de stockage 220 ;
- Une interface 230 de communication connectable à la première interface de communication du premier dispositif de traitement de données tactiques ;
- Un écran 240, par exemple un écran tactile.

Le microprocesseur 210 du premier dispositif de traitement, les moyens 220 de stockage du premier dispositif de traitement et l'interface 230 de communication du premier dispositif de traitement sont interconnectés par un bus 250.

Un dispositif de traitement de données tactiques et un dispositif mettant un œuvre un programme SIC : Système Information de Combat, par exemple SICS. Il peut s'agir un téléphone intelligent, d'une tablette, d'un ordinateur et plus généralement de tout dispositif de traitement.

La figure 1 montre un deuxième dispositif 400 de simulation d'un relais de communication. Le deuxième dispositif de simulation d'un relais de communication est structurellement identique au premier dispositif de simulation. Ainsi le deuxième dispositif de simulation comporte :
- Un microprocesseur 410 ;
- Des moyens de stockage 420, comportant :
   - Une zone 421 de simulation identique à la zone 121 de simulation des moyens de stockage du premier dispositif de simulation;
- Une première interface 430 de communication ;
- Une deuxième interface 440 de communication ;
- Un bus 450 pour interconnecter ses composants.

La figure 1 montre un deuxième dispositif 500 de traitement de données tactiques. Le deuxième dispositif de traitement de données tactiques est structurellement identique au premier dispositif de traitement de données tactiques. Ainsi le deuxième dispositif comporte :
- Un microprocesseur 510 ;
- Des moyens de stockage 520 ;
- Une interface 530 de communication ;
- Un écran 240.

La figure 1 montre que :
- Le premier dispositif de simulation est connecté au deuxième dispositif de simulation à travers un réseau 300. Il s'agit par exemple d'un réseau Ethernet ;
- Le deuxième dispositif de simulation est connecté au deuxième dispositif de traitement.

La figure 1 illustre des dispositifs physiques. Dans la pratique les différents dispositifs peuvent être tous ou pour partie d'entre eux seulement virtualisés. Dans le cas d'une virtualisation d'un dispositif de traitement de données tactiques, on virtualise les interfaces de communication correspondantes. Il est ainsi possible d'avoir tous les dispositifs virtualisés sur une seule machine physique.

On aura compris qu'il existe d'autres variantes de mise en œuvre. Par exemple, on peut envisager :
- Deux dispositifs de traitement de données tactiques connectés à un même dispositif de simulation ;
- Trois ou plus dispositifs de simulation ;

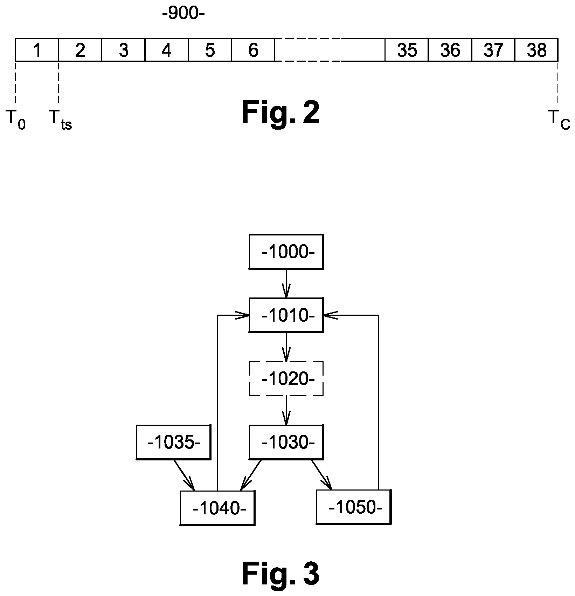

La figure 2 montre un cycle 900 temporel. Un tel cycle temporel se répète, la fin d'un cycle marquant le début du cycle suivant. Un tel cycle à une durée prédéterminée Tc. Le cycle 900 est divisé en créneaux temporels. Un créneau temporel à une durée prédéterminée Tts. Dans un cycle chaque créneau a un indice. C'est-à-dire que chaque créneau temporel du cycle temporel est numéroté.

De manière connue, pour le PR4G en mode TDMA, un cycle temporel comporte 38 créneaux temporels de 100ms. Dans la pratique un cycle peut durer jusqu'à 128 créneaux.

La figure 3 montre une étape 1000 de division d'un cycle temporel ayant une durée Tc en créneaux temporels d'une durée Tts. Cette étape est mise en œuvre par un dispositif de simulation, par exemple le premier dispositif 100 de simulation. Cette division est réalisée par au moins la gestion dans une mémoire du dispositif de simulation d'une structure représentant le cycle, c'est-à-dire d'une structure comportant un enregistrement par créneau temporel.

Un enregistrement de créneau temporel comporte au moins :
- Un identifiant le créneau : à cette effet on utilise l'indice du créneau ;
- Un mode de fonctionnement, un mode pouvant être :
   - Emission : le dispositif de simulation émet des données via la deuxième interface durant ce créneau,
   - Réception : le dispositif de simulation reçoit des données via la deuxième interface durant ce créneau.

Cette gestion permet de définir une liste d'indices dit exclus, il s'agit de la liste des indices correspondant à des créneaux étant dans le mode Emission. Dans la pratique, pour un PR4G, une telle liste comporte de 1 à 3 indices. Mais l'invention reste valable avec des listes comportant plus d'indices.

Une fois la division effectuée, le premier dispositif de simulation passe dans une étape 1010 de surveillance du trafic réseau sur la deuxième interface de communication. Ce trafic est surveillé selon le protocole UDP et sur un port réseau prédéterminé. De plus, tous les messages émis le sont en mode diffusion. Le port UDP en question est un paramètre du premier dispositif de simulation. Dans l'invention tous les dispositifs de simulation partage ce paramétrage. Ainsi chaque paquet de données émis par un dispositif de simulation est reçu par tous les autres dispositifs de simulation.

Pour simuler une connexion TDMA, un dispositif de simulation selon l'invention émet donc des paquets UDP, chaque paquet est structuré et comporte au moins :
- Un identifiant de dispositif de simulation ;
- Un identifiant de créneau temporel, c'est-à-dire une valeur d'indice de créneau temporel ;
- Une charge utile TDMA correspondant aux données à transmettre. Il ne faut pas confondre cette charge utile avec la charge utile UDP. La charge utile TDMA est incluse dans la charge utile UDP.

Dans une variante de l'invention un paquer UDP comporte également :
- Un identifiant de sous-canal radio ce qui permet de simuler l'utilisation des sous-canaux du PR4G.

Grâce à l'utilisation de la diffusion UDP, chaque dispositif de simulation peut détecter les autres. Ce mode de diffusion permet aussi de mettre un place un procédé d'élection d'un dispositif de simulation maître qui assure la synchronisation de la diffusion. Ce procédé est déclenché de manière périodique de manière à rendre le réseau plus résistant à la disparition du maître.

Dans une variante, le dispositif passe, pour chaque paquet UDP reçu à une étape 1020 de filtrage. Dans l'étape de filtrage le dispositif de simulation se comporte comme un firewall. Les règles appliquées sont celles de la zone 122 de filtres des moyens de stockage du dispositif de simulation. Les critères de filtrage sont, par exemple :
- L'identifiant de dispositif de simulation ;
- L'identifiant de créneau temporel ;

Si un message correspond à une règle de filtrage alors son traitement par le dispositif de simulation est interrompu.

Ce fonctionnement est intéressant pour permettre de simuler une communication entre deux PR4G à travers un troisième. Considérons, sur un même réseau, trois dispositifs de simulation chacun désigné par un identifiant : DS1, DS2, DS3. Alors si on configure DS1 pour filtrer les paquets venant de DS3 et DS3 pour filtrer les paquets venant de DS1, dans ce cas les communications entre DS1 et DS3 doivent passer par DS2 comme ce serait le cas sur un théâtre d'opération si DS1 et DS3 étaient distants de plus de 50 kms, mais de moins de 100 kms, et que DS2 soit localisé entre DS1 et DS3.

Le fait les dispositifs de simulation puissent se découvrir automatiquement permet aussi d'avoir une interface de configuration des filtres simplifiées. En effet pour les valeurs de filtrage possibles, il suffit d'utiliser les valeurs découvertes par l'écoute du réseau.

De l'étape de filtrage, ou de l'étape de surveillance selon les variantes, on passe à une étape 130 d'aiguillage en fonction du mode du créneau temporel.

Si on est dans un créneau correspondant au mode Réception alors on passe à une étape 1050 d'émission d'un message vers le premier dispositif de traitement de données tactiques. Si on est dans un créneau correspondant au mode Emission alors on passe à une étape 1040 d'émission d'un message via la deuxième interface de communication.

Dans l'étape 1050 d'émission d'un message vers le premier dispositif de traitement de données tactiques, le premier dispositif de simulation produit et émet un message vers le premier dispositif de traitement de données tactiques. Le contenu de ce message correspond à un message reçu par le premier dispositif de simulation pour un créneau temporelle en mode Réception. C'est-à-dire que le premier dispositif de simulation émet un message via la première interface pour tous les indices de créneaux sauf pour des créneaux identifiés par la liste des indices dits exclus.

Dans l'étape 1040 d'émission d'un message via la deuxième interface de communication le premier dispositif produit et diffuse un message UDP via la deuxième interface de communication. Le contenu de ce message dépend soit :
- D'une étape 1035 préalable dans laquelle le premier dispositif de traitement de données tactiques a envoyé un message, même vide ou un message signifiant « je n'ai rien à dire mais je suis là », au premier dispositif de simulation. C'est le contenu de ce message du premier dispositif de traitement qui est utilisé comme contenu utile du message diffusé par le premier dispositif de simulation ;
- D'une étape dans laquelle le dispositif de simulation a reçu un message via la deuxième interface pour un créneau temporel en réception associé par configuration au créneau temporelle en Emission courant.

Après l'étape d'émission d'un message via la deuxième interface et après l'étape d'émission d'un message vers le premier dispositif de traitement, le premier dispositif de simulation continue la surveillance du réseau.

Si les étapes sont décrites de manière séquentielle, il est évident qu'elles peuvent être mise en œuvre de manière parallèle, par exemple par l'utilisation d'une réserve de gestionnaire de requête, chaque gestionnaire correspondant à un processus capable de gérer un message.

L'invention permet ainsi de simuler une communication entre le premier dispositif de traitement de données tactiques et le deuxième dispositif de traitements de données tactiques. En effet :
- Un message émis par le premier dispositif de traitement vers le premier dispositif de simulation est diffusé par le premier dispositif de simulation ;
- Tous les messages diffusés par le premier dispositif de simulation sont reçus par le deuxième dispositif de simulation ;
- Tous les messages reçus par le deuxième dispositif de simulation sont émis vers le deuxième dispositif de traitement de données.

Cette explication est aussi valable pour les messages émis par le deuxième dispositif de traitement de données vers le deuxième dispositif de simulation.

Avec l'invention on peut donc efficacement simuler les fonctions radio d'un PR4G, en particulier celles correspondant à l'utilisation du TDMA.

## Revendications

1. Dispositif (100) de simulation d'un relais de communication pour au moins un dispositif (200) de traitement de données tactiques, **caractérisé en ce que** le dispositif de simulation comporte :
- Un système (120) de stockage de données ;
- Une première interface (130) de connexion avec le dispositif de traitement de données tactiques ;
- Une deuxième interface (140) de communication ;
- Un processeur (110) connecté au système de stockage et aux interfaces,
**caractérise en ce que** le processeur étant configuré pour :
- Diviser (1000) un cycle temporel ayant une première durée prédéterminée en créneaux temporels d'une deuxième durée prédéterminée, chaque créneau temporel étant identifié par un indice dans le cycle temporel ;
- Surveiller (1010) le trafic réseau sur la deuxième interface de communication ;
- Emettre (1050) un message via la première interface pour tous les indices de créneaux sauf pour des créneaux identifiés par une liste d'au moins un indice exclu ;
- Diffuser (1040) un message via la deuxième interface pour les créneaux identifiés par la liste d'au moins un indice exclu.

2. Dispositif de simulation d'un relais de communication selon la revendication 1, **caractérisé en ce que** le contenu des messages émis via la première interface est reçu via la deuxième interface.

3. Dispositif de simulation d'un relais de communication selon l'une des revendications précédentes, **caractérisé en ce que** le processeur est configuré pour filtrer (1020) les messages.

4. Dispositif de simulation d'un relais de communication selon l'une des revendications précédentes, **caractérisé en ce que** les communications via la deuxième interface sont réalisées en utilisant le protocole UDP.

5. Dispositif de simulation d'un relais de communication selon l'une des revendications précédentes, **caractérisé en ce qu'**un message reçu via la deuxième interface comporte un identifiant de dispositif de simulation d'un relais de communication.

6. Dispositif de simulation d'un relais de communication selon l'une des revendications précédentes, **caractérisé en ce qu'**un message reçu via la deuxième interface comporte un identifiant de canal radio.

7. Dispositif de simulation d'un relais de communication **selon l'une des revendications précédentes, caractérisé en ce que** le dispositif de simulation est un dispositif de traitement de données tactiques.

## Patentansprüche

1. Simulationsvorrichtung (100) eines Kommunikationsrelais für wenigstens eine Verarbeitungsvorrichtung (200) von taktischen Daten, **dadurch gekennzeichnet, dass** die Simulationsvorrichtung umfasst:
- ein System (120) zum Datenspeichern;
- eine erste Schnittstelle (130) zum Anschließen an die Verarbeitungsvorrichtung von taktischen Daten;
- eine zweite Schnittstelle (140) zur Kommunikation;
- einen Prozessor (110), der an das Speichersystem und an die Schnittstellen angeschlossen ist,
**dadurch gekennzeichnet, dass**
der Prozessor ausgestaltet ist zum:
- Teilen (1000) eines zeitlichen Zyklus mit einer ersten vorbestimmten Dauer in zeitliche Zeitfenster einer zweiten vorbestimmten Dauer, wobei jedes zeitliche Zeitfenster durch einen Index in dem zeitlichen Zyklus identifiziert ist;
- Überwachen (1010) des Netzverkehrs an der zweiten Kommunikationsschnittstelle;
- Ausgeben (1050) einer Meldung über die erste Schnittstelle für alle Zeitfensterindexe, ausgenommen für die Zeitfenster, die von einer Liste mit wenigstens einem ausgeschlossenen Index identifiziert sind;
- Ausstrahlen (1040) einer Nachricht über die zweite Schnittstelle für die Zeitfenster, die von der Liste von wenigstens einem ausgeschlossenen Index identifiziert sind.

2. Simulationsvorrichtung eines Kommunikationsrelais gemäß Anspruch 1, **dadurch gekennzeichnet, dass** der Inhalt der Meldungen, die über die erste Schnittstelle ausgegeben ist, über die zweite Schnittstelle empfangen ist.

3. Simulationsvorrichtung eines Kommunikationsrelais gemäß einem der voranstehenden Ansprüche, **dadurch gekennzeichnet, dass** der Prozessor zum Filtern (1020) der Nachrichten ausgestaltet ist.

4. Simulationsvorrichtung eines Kommunikationsrelais gemäß einem der voranstehenden Ansprüche, **dadurch gekennzeichnet, dass** die Kommunikationen über die zweite Schnittfläche unter Verwenden des Protokolls UDP realisiert sind.

5. Simulationsvorrichtung eines Kommunikationsrelais gemäß einem der voranstehenden Ansprüche, **dadurch gekennzeichnet, dass** eine Meldung, die über die zweite Schnittstelle empfangen ist, eine Simulationsvorrichtungskennung eines Kommunikationsrelais umfasst.

6. Simulationsvorrichtung eines Kommunikationsrelais gemäß einem der voranstehenden Ansprüche, **dadurch gekennzeichnet, dass** eine Meldung, die über die zweite Schnittstelle empfangen ist, eine Funkkanal-Kennung umfasst.

7. Simulationsvorrichtung eines Kommunikationsrelais **gemäß einem der voranstehenden Ansprüche, dadurch gekennzeichnet, dass** die Simulationsvorrichtung eine Verarbeitungsvorrichtung für taktische Daten ist.

## Claims

1. Device (100) for simulating a communication relay for at least one device (200) for processing tactical data, **characterised in that** the simulation device comprises:
- A data storage system (120);
- A first connection interface (130) for connection with the device for processing tactical data;
- A second communication interface (140);
- A processor (110) connected to the storage system and to the interfaces,
**characterised in that** the processor is configured to:
- Divide (1000) a temporal cycle having a first predetermined duration into time slots of a second predetermined duration, each time slot being identified by an index in the temporal cycle;
- Monitor (1010) the network traffic over the second communication interface;
- Emit (1050) a message via the first interface for all the indices of slots except for slots identified by a list of at least one excluded index;
- Broadcast (1040) a message via the second interface for the slots identified by the list of at least one excluded index.

2. Device for simulating a communication relay according to claim 1, **characterised in that** the content of the messages emitted via the first interface is received via the second interface.

3. Device for simulating a communication relay according to one of the preceding claims, **characterised in that** the processor is configured to filter (1020) the messages.

4. Device for simulating a communication relay according to one of the preceding claims, **characterised in that** the communications via the second interface are carried out by using the UDP protocol.

5. Device for simulating a communication relay according to one of the preceding claims, **characterised in that** a message received via the second interface comprises an identifier of a device for simulating a communication relay.

6. Device for simulating a communication relay according to one of the preceding claims, **characterised in that** a message received via the second interface comprises a radio channel identifier.

7. Device for simulating a communication relay according to one of the preceding claims, **characterised in that** the device for simulating is a device for processing tactical data.
